# EUROPEAN PATENT APPLICATION

(11) **EP 4 456 575 A1**
(43) Date of publication of application: **30.10.2024**
(21) Application number: 22909934.6
(22) Date of filing: 19.12.2022
(51) Int. Cl.: H04W 4/70

(54) **INFORMATION TRANSMISSION METHOD AND APPARATUS, RESOURCE CONFIGURATION METHOD AND APPARATUS, TERMINAL DEVICE, AND NETWORK DEVICE**

(30) Priority: 22.12.2021 CN 202111578981
(71) Applicant: Datang Mobile Communications Equipment Co., Ltd., Beijing 100085 (CN)
(72) Inventor: ZHAO, Yali, Beijing 100085 (CN)
(74) Representative: Studio Torta S.p.A.
(86) International application number: PCT/CN2022/139998
(87) International publication number: WO 2023/116622

(57) **Abstract**

An information transmission and resource configuration method, apparatus, a terminal device and a network device are provided, relating to the field of communication technology. The method is performed by the terminal device, and includes: sending assistance information to a network device; wherein the assistance information comprises at least one of the following: a correspondence between a destination address of a sidelink interface and a message type of a sidelink interface message; o identification information of the terminal device.

## Description

### CROSS REFERENCE OF RELATED APPLICATION

The present disclosure claims a priority of Chinese patent disclosure No. 202111578981.4 filed on December 22, 2021, which is incorporated herein by reference in its entirety.

### TECHNICAL FIELD

The present disclosure relates to the field of communication technology, and in particular to an information transmission and resource configuration method, apparatus, a terminal device and a network device.

### BACKGROUND

At present, the configuration method of the sidelink interface resource pool in the fifth generation (5G) new air interface is as follows: a common resource pool can be used for sidelink (Sidelink, SL) interface communication and SL discovery. In addition, a dedicated SL discovery resource pool is introduced for SL discovery.

In the future, with the introduction of more complex scenarios such as UE-to-UE (U2U relay), more dedicated resource pools may be introduced to save power at the receiving end, such as a dedicated resource pool for UE-to-Network (U2N relay) discovery and a dedicated resource pool for U2U relay discovery. In addition, for relay UE and remote UE, due to their different roles, their available resource allocation modes may also be different, so the sidelink interface resource allocation mechanism in the relevant technology needs to be enhanced.

### SUMMARY

The embodiments of the present disclosure provides an information transmission and resource configuration method, apparatus, terminal device and network device to solve the problem that the sidelink interface resource allocation mechanism in the related art cannot ensure reasonable resource allocation for the sidelink interface.

In order to solve the above technical problems, the present disclosure provides an information transmission method, which is executed by a terminal device and includes:
sending assistance information to a network device;
where the assistance information includes at least one of the following:
a correspondence between a destination address of a sidelink interface and a message type of a sidelink interface message; or
identification information of the terminal device.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
a relay from terminal device to network device;
a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

A resource configuration method is further provided in the embodiment of the present disclosure, performed by a network device, including:
receiving assistance information sent by a terminal device;
allocating resources of a sidelink interface for the terminal device according to the assistance information;
where the assistance information includes at least one of the following:
a correspondence between a destination address of a sidelink interface and a message type of a sidelink interface message; or
identification information of the terminal device.

Optionally, the allocating resources of the sidelink interface for the terminal device according to the assistance information includes at least one of the following:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, subsequent to the allocating resources of a sidelink interface for the terminal device according to the assistance information, the method further includes:
sending a first configuration to the terminal device;
the first configuration includes at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
where the first parameter includes: the message type and/or identification information of the sidelink interface message, and the configuration information includes at least one of the following: a resource allocation mode and a time-frequency resource configuration.

Optionally, the transmission mode of the first configuration includes one of the following:
radio resource control (RRC) reconfiguration message;
terminal-to-network interface downlink RRC message.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
a relay from terminal device to network device;
a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

A terminal device is further provided in the embodiment of the present disclosure, including a memory, a transceiver, and a processor:
the memory is configured to store a computer program; a transceiver is configured to send and receive data under a control of the processor; and the processor is configured to read the computer program in the memory to perform:
sending, through the transceiver, assistance information to a network device;
where the assistance information includes at least one of the following:
a correspondence between a destination address of a sidelink interface and a message type of a sidelink interface message; or
identification information of the terminal device.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
a relay from terminal device to network device;
a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

A network device is further provided in the embodiment of the present disclosure, including a memory, a transceiver, and a processor:
the memory is configured to store a computer program; a transceiver is configured to send and receive data under a control of the processor; and the processor is configured to read the computer program in the memory to perform:
receiving, through the transceiver, assistance information sent by a terminal device;
allocating resources of a sidelink interface for the terminal device according to the assistance information;
where the assistance information includes at least one of the following:
a correspondence between a destination address of a sidelink interface and a message type of a sidelink interface message; or
identification information of the terminal device.

Optionally, the processor is configured to read the computer program in the memory to perform at least one of the following:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, the processor is configured to read the computer program in the memory to perform:
sending, through the transceiver, a first configuration to the terminal device;
the first configuration includes at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
where the first parameter includes: the message type and/or identification information of the sidelink interface message, and the configuration information includes at least one of the following: a resource allocation mode and a time-frequency resource configuration.

An information transmission apparatus is further provided in the embodiment of the present disclsoure, applied to a terminal device, including:
a first sending unit, configured to send assistance information to a network device;
where the assistance information includes at least one of the following:
a correspondence between a destination address of a sidelink interface and a message type of a sidelink interface message; or
identification information of the terminal device.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
a relay from terminal device to network device;
a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

A resource configuration apparatus is further provided in the embodiment of the present disclosure, applied to a network device, including:
a receiving unit, configured to receive assistance information sent by a terminal device;
an allocating unit, configured to allocate resources of a sidelink interface for the terminal device according to the assistance information;
where the assistance information includes at least one of the following:
a correspondence between a destination address of a sidelink interface and a message type of a sidelink interface message; or
identification information of the terminal device.

Optionally, the allocating unit is configured to perform:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, after the allocating unit allocates resources of the sidelink interface for the terminal device according to the assistance information, the apparatus further includes:
a second sending unit, configured to send a first configuration to the terminal device;
the first configuration includes at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
where the first parameter includes: the message type and/or identification information of the sidelink interface message, and the configuration information includes at least one of the following: a resource allocation mode and a time-frequency resource configuration.

Optionally, the transmission mode of the first configuration includes one of the following:
radio resource control (RRC) reconfiguration message;
terminal-to-network interface downlink RRC message.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
a relay from terminal device to network device;
a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

A processor-readable storage medium is further provided in the embodiment of the present disclosure, storing a computer program, where the computer program is configured to cause the processor to perform the method hereinabove.

The beneficial effects of this disclosure are as follows:
According to the embodiment of the present disclosure, by sending assistance information that carries a correspondence between a destination address of a sidelink interface and a message type of a sidelink interface message and/or identification information of the terminal device to the network device, the network device is assisted in performing resource allocation for the sidelink interface of the terminal device, thereby ensuring reasonable resource allocation for the sidelink interface, making sure that the resource allocation for the sidelink interface meets the requirements of all application scenarios.

### BRIEF DESCRIPTION OF THE DRAWINGS

In order to more clearly illustrate the technical solutions in the embodiments of the present application or the related technologies, the drawings required for use in the embodiments or the related technical descriptions are briefly introduced below. Obviously, the drawings described below are only some embodiments recorded in the present application. For ordinary technicians in this field, other drawings can be obtained based on these drawings without paying creative labor.
Fig.1 is a structural diagram of a network system applicable to an embodiment of the present application;
Fig.2 is a schematic diagram showing a flow chart of an information transmission method applied to a terminal device according to an embodiment of the present disclosure;
Fig.3 is a schematic diagram showing a communication process according to an embodiment of the present application;
Fig.4 is a schematic diagram showing a flow chart of a resource configuration method applied to a network device according to an embodiment of the present disclosure;
Fig.5 is a schematic diagram showing a unit of a terminal device according to an embodiment of the present disclosure;
Fig.6 is a structural diagram of a terminal device according to an embodiment of the present application;
Fig.7 is a schematic diagram showing a unit of a network device according to an embodiment of the present disclosure; and
Fig. 8 is a structural diagram of a network device according to an embodiment of the present application.

### DETAILED DESCRIPTION

The following will be combined with the drawings in the embodiments of the present application to clearly and completely describe the technical solutions in the embodiments of the present application. Obviously, the described embodiments are part of the embodiments of the present application, not all of the embodiments. Based on the embodiments in the present application, all other embodiments obtained by ordinary technicians in this field without creative work are within the scope of protection of this application.

The terms "first", "second", etc. in the specification and claims of the present application are used to distinguish similar objects, and are not necessarily used to describe a specific order or sequential order. It should be understood that the data used in this way can be interchanged where appropriate, so that the embodiments of the present application described herein, for example, are implemented in a sequence other than those illustrated or described herein. In addition, the terms "including" and "having" and any of their variations are intended to cover non -exclusive inclusions, for example, the process, method, system, product or equipment including a series of steps or units is not necessarily limited to those steps or units clearly listed, but may include other steps or units that are not clearly listed or inherent to these processes, methods, products or equipment.

In the embodiments of the present application, the term "and/or" describes the association relationship of associated objects, indicating that three relationships may exist. For example, A and/or B can represent: A exists alone, A and B exist at the same time, and B exists alone. The character "/" generally indicates that the associated objects before and after are in an "or" relationship. In the embodiments of the present application, the term "plurality" refers to two or more than two, and other quantifiers are similar.

The words such as "exemplary" or "for example" are configured to indicate examples, illustrations or descriptions. Any embodiment or design described as "exemplary" or "for example" in the embodiments of the present application should not be interpreted as being more optional or more advantageous than other embodiments or designs. Specifically, the use of words such as "exemplary" or "for example" is intended to present related concepts in a specific way.

The following describes an embodiment of the present application in conjunction with the accompanying drawings. The resource configuration method, device, network device, and terminal device provided in the embodiment of the present application can be applied to a wireless communication system. The wireless communication system can be a system using the fifth generation (5th Generation, 5G) mobile communication technology (hereinafter referred to as a 5G system). It can be understood by those skilled in the art that the 5G NR system is only an example and is not a limitation.

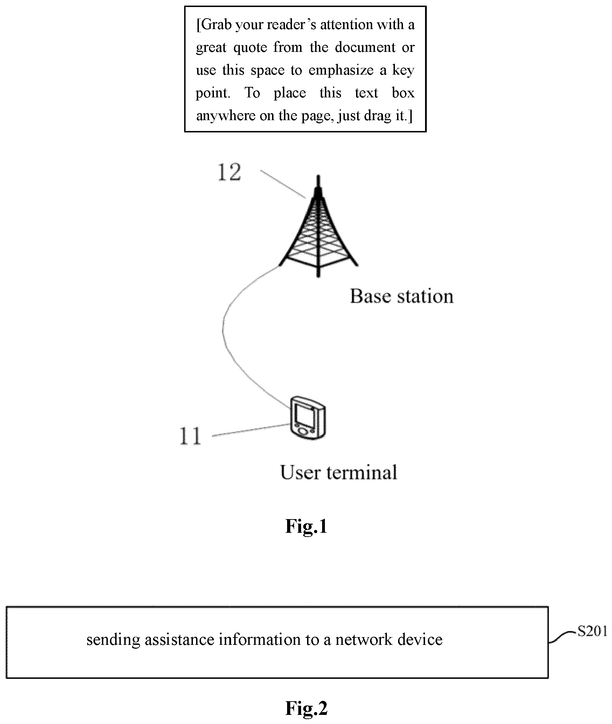

Referring to Fig. 1, Fig. 1 is a structural diagram of a network system applicable to an embodiment of the present application. As shown in Fig. 1, the network system includes a user terminal 11 and a base station 12, where the user terminal 11 may be a user equipment (UE), for example, a mobile phone, a tablet computer (Tablet Personal Computer), a laptop computer (Laptop Computer), a personal digital assistant (PDA), a mobile Internet device (MID) or a wearable device (Wearable Device) and other terminal side devices. It should be noted that the specific type of the user terminal 11 is not limited in the embodiment of the present application. The base station 12 may be a base station of 5G and later versions (for example, a next generation base station (Generation-Node-B, gNB), 5G NR NB), or a base station in other communication systems, or referred to as a node B. It should be noted that in the embodiment of the present application, only a 5G base station is taken as an example, but the specific type of the base station 12 is not limited.

The embodiments of the present application provide an information transmission and resource configuration method, apparatus, terminal device and network device to solve the problem that the sidelink interface resource allocation mechanism in the related art cannot ensure reasonable resource allocation for the sidelink interface.

Among them, the method and the device are based on the same application concept. Since the method and the device solve the problem in a similar principle, the implementation of the device and the method can refer to each other, and the repeated parts will not be repeated.

As shown in Fig. 2, an embodiment of the present disclosure provides an information transmission method, which is executed by a terminal device and includes:
Step S201, sending assistance information to a network device;
It should be noted that the assistance information is used to assist the network device in performing resource configuration of the sidelink interface for the terminal device (or the assistance information enables the network device to perform resource allocation of the sidelink interface for the terminal device).

It should be noted that the assistance information carries at least one of the following:
A11, the correspondence between the destination address of the sidelink interface and the message type of the sidelink interface message;
   It should be noted that the destination address of the sidelink interface can be represented by the sidelink interface L2 destination address, and the correspondence between the destination address of the sidelink interface and the message type of the sidelink interface message can be a correspondence list, that is, the correspondence list includes the destination address of the sidelink interface and the message type of the sidelink interface message corresponding to the destination address of each sidelink interface.
A12. identification information of the terminal device.

It should be noted that by sending assistance information carrying the correspondence between the destination address of the sidelink interface and the message type of the sidelink interface message and/or the identification information of the terminal device to the network device, the auxiliary network device performs resource configuration of the sidelink interface for the terminal device, which can ensure reasonable resource allocation for the sidelink interface, so that the sidelink interface resource allocation meets the requirements of all application scenarios.

Optionally, the transmission method of the assistance information in the embodiment of the present application includes any one of the following:
B11, sidelink terminal information (SidelinkUEInformation, SUI);
B 12, terminal sidelink interface assistance information (UEAssistantInformation, UAI);
B 13, sidelink interface radio resource control (RRC) signaling;
It should be noted that the sidelink interface RRC signaling is the uplink RRC signaling newly introduced in the embodiment of the present application for transmitting the above-mentioned A11 and/or A12.

Optionally, the message type of the sidelink interface message in the embodiment of the present application includes one of the following:
C11, sidelink discovery message;
C12, sidelink communication message.

Optionally, depending on different application scenarios, the message type of the sidelink interface message may further indicate first information, where the first information is configured to indicate an application scenario corresponding to the identity of the terminal. For example, the message type includes the first information.

Optionally, depending on different application scenarios, the identification information of the terminal device may further indicate first information, where the first information is configured to indicate the application scenario corresponding to the identity of the terminal device. For example, the identification information of the terminal device includes the first information.

It should be noted here that, usually when the assistance information includes the above-mentioned A11 and A12, optionally, in order to save signaling overhead, only the first information may be carried in the message type or identification information.

Specifically, the first information includes at least one of the following:
D11, sidelink transmission;
That is to say, in this case, the application scenario of the terminal device is a sidelink transmission scenario.

It should be noted that the sidelink transmission refers to the conventional sidelink transmission in the related art, that is, data is directly received or sent between two terminals through the PC5 interface.

D12, first relay;
It should be noted that the first relay includes at least one of the following:
D121, terminal device to network device relay (U2N relay);
D122, relay from terminal device to terminal device (U2U relay).

That is to say, in this case, the application scenario of the terminal device is the relay scenario, and the terminal device will indicate a U2N relay scenario, a U2U relay scenario, or a U2N relay scenario and a U2U relay scenario.

It should be further explained that since the U2N relay and the U2U relay can be divided into two types, namely, layer 2 (L2) and layer 3 (L3), the first relay also includes at least one of the following:
Layer 2 first relay;
Layer 3 first relay.

That is to say, the first information may only indicate that the identity of the terminal device corresponds to the U2N relay scenario and/or the U2U relay scenario; further, the first information may also indicate which layer of relay the terminal device's identity corresponds to in the U2N relay and/or the U2U relay.

Optionally, the identification information of the terminal device includes one of the following:
E11, remote UE;
E12, relay UE;
E13, sidelink terminal (SL UE).

It should be further noted that, when the assistance information carries the identification information of the terminal device, and the identification information of the terminal device indicates that the terminal is a relay terminal, the assistance information further carries duplex capability indication information supported by the relay terminal at the sidelink interface;
The duplex capability indication information is configured to indicate that the relay terminal supports full-duplex or half-duplex at the sidelink interface.

It should be noted that the duplex capability indication information can assist the network in selecting a resource allocation strategy when the network allocates resources. For example, the network device can decide whether the terminal can send and receive data at the same time based on the duplex capability indication information.

Optionally, after receiving the assistance information, the network device allocates resources of the sidelink interface to the terminal device. Specifically, the network device allocates resources of the sidelink interface to the terminal device using at least one of the following:
F11. in a case that the sidelink interface messages corresponding to different destination addresses of the sidelink interface of the terminal device have different message types and different message types correspond to different resource pools, resources in different resource pools are allocated to different destination addresses;
It should be noted here that the network device pre-configures different resource pools for different message types, and when allocating resources for different destination addresses of message types corresponding to different sidelink interface messages, resources are selected from different resource pools.
F12. different resource allocation modes are configured for terminal devices having different identification information;
It should be noted here that in this case, different resource allocation modes are configured for terminal devices with different identities. For example, the U2U remote UE is restricted to use only the resource allocation mode selected by the terminal (i.e. mode 2), and the U2U relay UE can be configured to the resource allocation mode scheduled by the network (i.e. mode 1) or mode 2.
F 13. different resource allocation strategies are adopted for terminals having different identification information;
It should be noted here that in this case, different resource allocation strategies are configured for terminal devices with different identities. For example, when the resource allocation strategy is whether to consider duplex capability, for the U2U relay UE, its duplex/half-duplex capability needs to be considered when allocating resources, while for the remote UE, this capability is not considered.

Optionally, after the network device allocates resources for the terminal and obtains the first configuration, the first configuration should also be sent to the terminal device; further, the transmission method of the first configuration includes one of the following:
RRC reconfiguration message;
terminal-to-network interface downlink RRC message (i.e., Uu interface);
It should be noted that the Uu interface downlink RRC message is a downlink RRC message newly introduced in this application for transmitting the first configuration.

Specifically, the first configuration includes at least one of the following:
H11, indicating configuration information corresponding to the terminal device by the terminal device;
It should be noted that, in this case, the configuration information is differentiated by the terminal device, that is, one terminal device corresponds to one configuration information (or one configuration information).
H12. indicating configuration information corresponding to the destination address of each sidelink interface of the terminal device based on the destination address of each sidelink interface of the terminal device;
It should be noted that in this case, the configuration information is distinguished by the destination address of the sidelink interface, that is, the destination address of one communication interface corresponds to one configuration information. In other words, the terminal device corresponds to several destination addresses of sidelink interfaces, and the network device allocates several configuration information to the terminal device.
H13. indicating, based on a first parameter of the terminal device, configuration information corresponding to the first parameter;
It should be noted that in this case, the configuration information is distinguished by the first parameter, that is, one first parameter corresponds to one configuration information, that is, the terminal device corresponds to several first parameters, and the network device allocates several configuration information to the terminal device.

It should be noted that the first parameter includes: the message type and /or identification information of the sidelink interface message.

H14, indicating, based on a first parameter in each destination address of the sidelink interface of the terminal device, configuration information corresponding to the first parameter;
It should be noted that in this case, the configuration information is distinguished by the first parameter under each destination address, that is, one destination address corresponds to one or several first parameters, and one first parameter corresponds to one configuration information. In other words, the sidelink interface of the terminal device corresponds to several destination addresses, and the network device allocates configuration information corresponding to each first parameter under these destination addresses to the terminal device.

Specifically, the configuration information mentioned in the embodiments of the present application includes at least one of the following: resource allocation mode and time-frequency resource configuration.

The specific application of this application is illustrated below with examples.

Specific application scenario 1: The assistance information only carries the correspondence between the destination address of the sidelink interface and the message type of the sidelink interface message

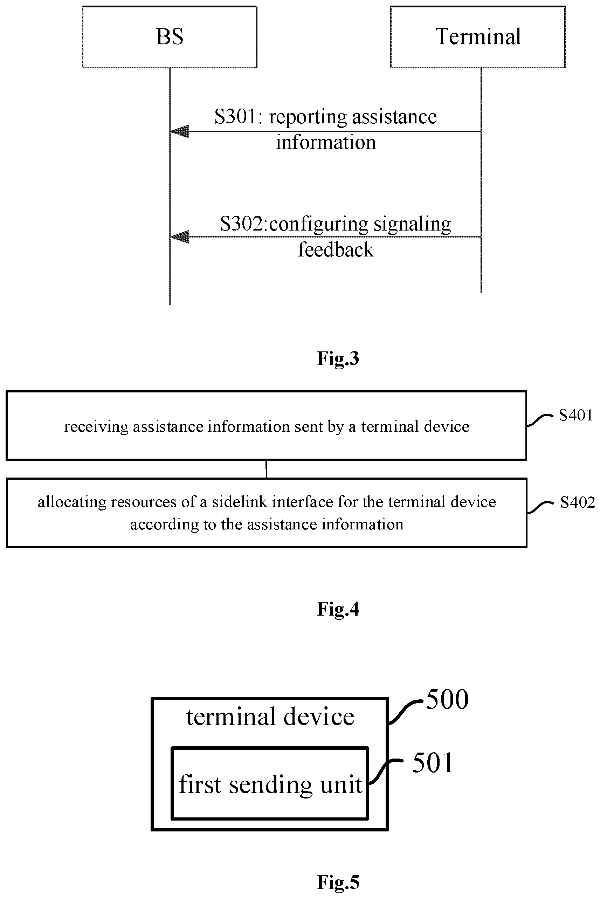

As shown in Fig.3, taking the communication between the terminal and the base station as an example, the specific implementation process in this case is as follows:
Step S301, reporting assistance information;
The terminal sends assistance information to the base station, and the assistance information needs to carry a correspondence between a destination address of the sidelink interface and a message type of the sidelink interface message.

The assistance information may be SUI, UAI or other newly introduced uplink RRC signaling.

Specifically, the message type of the sidelink interface message may be, but is not limited to, one of the following: a discovery message, a communication message. Depending on the application scenario, the message type of the sidelink interface may further include first information, and the first information is configured to indicate the application scenario corresponding to the terminal's identity. Specifically, the application scenario mentioned in this application may be, but is not limited to, one of the following or a combination:
SL transmission;
U2N relay, specifically, in this scenario, it can be further divided into L2 U2N relay scenario and L3 U2N relay scenario;
U2U relay, specifically, in this scenario, can be further divided into L2 U2U relay scenario and L3 U2U relay scenario.
for example:
   The correspondence between the destination address of the sidelink interface carried in the assistance information and the message type of the sidelink interface message may specifically be as follows:
   L2 destination ID X, the message type of the sidelink interface message corresponding to it is L2 U2U relay discovery message;
   L2 destination ID Y, the corresponding sidelink interface message type is L3 U2N relay discovery message.

L2 destination ID Z, the message type of the corresponding sidelink interface message is sidelink communication message.

Step S302, configuring signaling feedback;
After receiving the assistance information, the base station may perform different operations on the terminal according to the correspondence between the destination address of the sidelink interface carried in the assistance information and the message type of the sidelink interface message. The specific operations may be but are not limited to the following operations:
If different destination addresses correspond to different message types, and the messages of the different message types correspond to different resource pools, then when the network allocates sidelink interface resources, resources in different resource pools may be allocated to different destination addresses.

After receiving the assistance information and determining the configuration, the base station needs to send a configuration signaling to the terminal. The configuration signaling may be an RRC reconfiguration message in the related art or a newly introduced downlink RRC message. The content of the configuration signaling may be, but is not limited to, one of the following:
1. Resource allocation mode and/or time-frequency resource configuration used by the terminal;
2. indicating a resource allocation mode and/or time-frequency resource configuration used by a destination address of the terminal based on each destination address of the sidelink interface;
3. Indicating a resource allocation mode and/or time-frequency resource configuration corresponding to the message type and/or identity identification information of the sidelink interface message based on the message type and/or identity identification information of the sidelink interface message;
4. Indicating, based on each destination address of the sidelink interface, a resource allocation mode and/or time-frequency resource configuration corresponding to the message type and/or identity identification information of the sidelink interface message at the destination address.
for example:
Assuming that the terminal sending the assistance information is a terminal that supports both U2U relay and U2N relay, and U2U relay discovery and U2N relay discovery correspond to different resource pools respectively, the base station can indicate the specific resources used by the destination address of the terminal based on each destination address of the sidelink interface. The resources used by the destination address corresponding to U2U relay discovery and the resources used by the destination address corresponding to U2N relay discovery belong to different resource pools.

Specific application scenario 2: Correspondence between the destination address of the sidelink interface and the message type of the sidelink interface message carried in the assistance information and the identification information of the terminal device

Taking the communication between the terminal and the base station as an example, the specific implementation process in this case is as follows:
Step S301, reporting assistance information;
The terminal sends assistance information to the base station, and the assistance information needs to carry the correspondence between the destination address of the sidelink interface and the message type of the sidelink interface message and the identification information of the terminal.

The assistance information may be SUI, UAI or other newly introduced uplink RRC signaling.

Specifically, the message type of the sidelink interface message may be, but is not limited to, one of the following: discovery message, communication message. The identification information of the terminal may be, but is not limited to, one of the following: remote UE, relay UE, SL UE. The message type of the sidelink interface message and/or the identification information of the terminal may further include first information, and the first information is configured to indicate the application scenario corresponding to the identity of the terminal. Specifically, the application scenario mentioned in the present application may be, but is not limited to, one of the following or a combination:
SL transmission;
U2N relay, specifically, in this scenario, it can be further divided into L2 U2N relay scenario and L3 U2N relay scenario;
U2U relay, specifically, in this scenario, can be further divided into L2 U2U relay scenario and L3 U2U relay scenario.

Optionally, if the identification information indicates that the terminal is a relay terminal, the assistance information also needs to include duplex capability indication information supported by the relay terminal at the sidelink interface.
for example:
Assuming that three terminals UE1, UE2 and UE3 send assistance information to the base station respectively.

UE1 sends assistance information to the base station, which carries L2 destination ID X. The message type of the corresponding sidelink interface message is L2 U2U relay discovery message, and the corresponding identification information may be relay UE. The relay UE only supports half-duplex.

UE2 sends assistance information to the base station, which carries L2 destination ID Y. The message type of the corresponding sidelink interface message is L3 U2N relay discovery message, and the corresponding identification information may be remote UE.

UE3 sends assistance information to the base station, which carries L2 destination ID Z. The message type of the corresponding sidelink interface message is a sidelink communication message, and the corresponding identification information may be SL UE.

Step S302, configuring signaling feedback;
After receiving the assistance information, the base station may perform different operations on the terminal according to the correspondence between the destination address of the sidelink interface and the message type of the sidelink interface message carried in the assistance information and the identification information of the terminal. The specific operation may be, but is not limited to, one or a combination of the following:
1. If different destination addresses correspond to different message types, and the messages of the different message types correspond to different resource pools, then when the network allocates sidelink interface resources, resources in different resource pools may be allocated to different destination addresses;
2. Configure different resource allocation modes for terminals having different identities. For example, restrict U2U remote UE to use mode 2, and U2U relay UE can be configured to mode 1 or mode 2;
3. Use different resource allocation strategies for terminals having different identities. For example, for U2U relay UE, its duplex/half-duplex capability needs to be considered when allocating resources, but for remote UE, this capability is not considered.

After receiving the assistance information and determining the configuration, the base station needs to send a configuration signaling to the terminal. The configuration signaling may be an RRC reconfiguration message in the related art or a newly introduced downlink RRC message. The content of the configuration signaling may be, but is not limited to, one of the following:
1. resource allocation mode and/or time-frequency resource configuration used by the terminal;
2. indicating a resource allocation mode and/or time-frequency resource configuration used by a destination address of the terminal based on each destination address of the sidelink interface;
3. indicating a resource allocation mode and/or time-frequency resource configuration corresponding to the message type and/or identity identification information of the sidelink interface message based on the message type and/or identity identification information of the sidelink interface message;
4. indicating, based on each destination address of the sidelink interface, a resource allocation mode and/or time-frequency resource configuration corresponding to the message type and/or identity identification information of the sidelink interface message at the destination address.
for example:
For UE1 and UE2 mentioned in the example of step S401, if the protocol restricts U2U remote UE to use only mode 2, the base station only allows UE1 to be configured to use mode 2. If UE1 is a relay UE, the base station can determine its resource allocation mode as mode 1 or mode 2 according to network implementation.

Furthermore, if the base station configures UE2 to use mode 1, if UE2 only supports half-duplex mode, then after the base station receives the Sidelink Scheduling Request (SR)Buffer Status Report (BSR) sent by UE2, when allocating sidelink interface resources for it, it will try to avoid allocating resources to UE2 on different sidelink interfaces (also called PC5 interfaces) at the same time.

It should be noted that this method of the embodiment of the present application can ensure reasonable resource allocation for the sidelink interface in complex scenarios.

The embodiment of the present application can be applicable to a variety of systems, especially 5G systems. For example, the applicable system may be a global system of mobile communication (GSM) system, a code division multiple access (CDMA) system, a wideband code division multiple access (WCDMA) general packet radio service (GPRS) system, a long term evolution (LTE) system, a LTE frequency division duplex (FDD) system, a LTE time division duplex (TDD) system, an advanced long term evolution (LTE-A) system, a universal mobile telecommunication system (UMTS), a worldwide interoperability for microwave access (WiMAX) system, a 5G new radio (NR) system, etc. These various systems include terminal device and network device. The system may also include a core network part, such as an evolved packet system (EPS), a 5G system (5GS), etc.

The terminal device involved in the embodiments of the present application may be a device that provides voice and/or data connectivity to a user, a handheld device with a wireless connection function, or other processing devices connected to a wireless modem. In different systems, the names of terminal devices may also be different. For example, in a 5G system, the terminal device may be called a user equipment (UE). A wireless terminal device can communicate with one or more core networks (CN) via a radio access network (RAN). The wireless terminal device may be a mobile terminal device, such as a mobile phone (or a "cellular" phone) and a computer with a mobile terminal device. For example, it may be a portable, pocket-sized, handheld, computer-built-in or vehicle-mounted mobile device that exchanges language and/or data with a wireless access network. For example, personal communication service (PCS) phones, cordless phones, session initiation protocol (SIP) phones, wireless local loop (WLL) stations, personal digital assistants (PDAs), and other devices. The wireless terminal device may also be referred to as a system, a subscriber unit, a subscriber station, a mobile station, a mobile station, a remote station, an access point, a remote terminal device, an access terminal device, a user terminal device, a user agent, and a user device, but is not limited in the embodiments of the present application.

The network device involved in the embodiments of the present application may be a base station, which may include multiple cells providing services to the terminal. Depending on the specific application scenario, the base station may also be called an access point, or may be a device in the access network that communicates with the wireless terminal device through one or more sectors on the air interface, or other names. The network device may be used to interchange received air frames with Internet Protocol (IP) packets, acting as a router between the wireless terminal device and the rest of the access network, where the rest of the access network may include an Internet Protocol (IP) communication network. The network device may also coordinate the attribute management of the air interface. For example, the network device involved in the embodiments of the present application may be a network device (Base Transceiver Station, BTS) in the Global System for Mobile communications (Global System for Mobile communications, GSM) or Code Division Multiple Access (Code Division Multiple Access, CDMA), or a network device (NodeB) in Wide-band Code Division Multiple Access (WCDMA), or an evolutionary network device (evolutional Node B, eNB or e-NodeB) in the long term evolution (long term evolution, LTE) system, a 5G base station (gNB) in the 5G network architecture (next generation system), or a home evolved Node B (Home evolved Node B, HeNB), a relay node, a home base station (femto), a pico base station (pico), etc., which is not limited in the embodiments of the present application. In some network structures, the network device may include a centralized unit (centralized unit, CU) node and a distributed unit (distributed unit, DU) node, and the centralized unit and the distributed unit may also be arranged geographically separately.

Network devices and terminal devices can each use one or more antennas for multiple input multiple output (MIMO) transmission. MIMO transmission can be single user MIMO (SU-MIMO) or multi-user MIMO (MU-MIMO). Depending on the form and number of antenna combinations, MIMO transmission can be 2D-MIMO, 3D-MIMO, FD-MIMO or massive-MIMO, or it can be diversity transmission, precoding transmission or beamforming transmission, etc.

Corresponding to the implementation on the terminal device side, as shown in Fig.4, an embodiment of the present disclosure provides a resource configuration method, which is performed by a network device and includes:
Step S401: receiving assistance information sent by a terminal device;
Step S402: allocating resources of a sidelink interface for the terminal device according to the assistance information;
the assistance information includes at least one of the following:
   a correspondence between a destination address of a sidelink interface and a message type of a sidelink interface message; or
   identification information of the terminal device.

Optionally, the allocating resources of the sidelink interface for the terminal device according to the assistance information includes at least one of the following:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, subsequent to the allocating resources of a sidelink interface for the terminal device according to the assistance information, the method further includes:
sending a first configuration to the terminal device;
the first configuration includes at least one of the following:
   indicating configuration information corresponding to the terminal device by the terminal device;
   indicating configuration information corresponding to the destination address of each sidelink interface of the terminal device based on the destination address of each sidelink interface of the terminal device;
   indicating, based on a first parameter of the terminal device, configuration information corresponding to the first parameter;
   indicating, based on a first parameter in each destination address of the sidelink interface of the terminal device, configuration information corresponding to the first parameter;
   where the first parameter includes: the message type and/or identification information of the sidelink interface message, and the configuration information includes at least one of the following: a resource allocation mode and a time-frequency resource configuration.

Optionally, the transmission mode of the first configuration includes one of the following:
radio resource control (RRC) reconfiguration message;
terminal-to-network interface downlink RRC message.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
   a relay from terminal device to network device;
   a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

It should be noted that all descriptions about the network device side in the above embodiments are applicable to the embodiments of the resource configuration method applied to the network device side, and can achieve the same technical effects.

As shown in Fig.5, an embodiment of the present disclosure provides a terminal device 500, including:
a first sending unit 501, configured to send assistance information to a network device;
where the assistance information includes at least one of the following:
   a correspondence between a destination address of a sidelink interface and a message type of a sidelink interface message; or
   identification information of the terminal device.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
   a relay from terminal device to network device;
   a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

It should be noted that the terminal device embodiment is a terminal device that corresponds one-to-one to the above-mentioned method embodiment. All implementation methods in the above-mentioned method embodiment are applicable to the embodiment of the terminal device and can achieve the same technical effect.

It should be noted that the division of units in the embodiments of the present application is schematic and is only a logical function division. There may be other division methods in actual implementation. In addition, each functional unit in each embodiment of the present application may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present application is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to execute all or part of the steps of the method described in each embodiment of the present application. The aforementioned storage medium includes: U disk, mobile hard disk, read-only memory (ROM), random access memory (RAM), disk or optical disk and other media that can store program code.

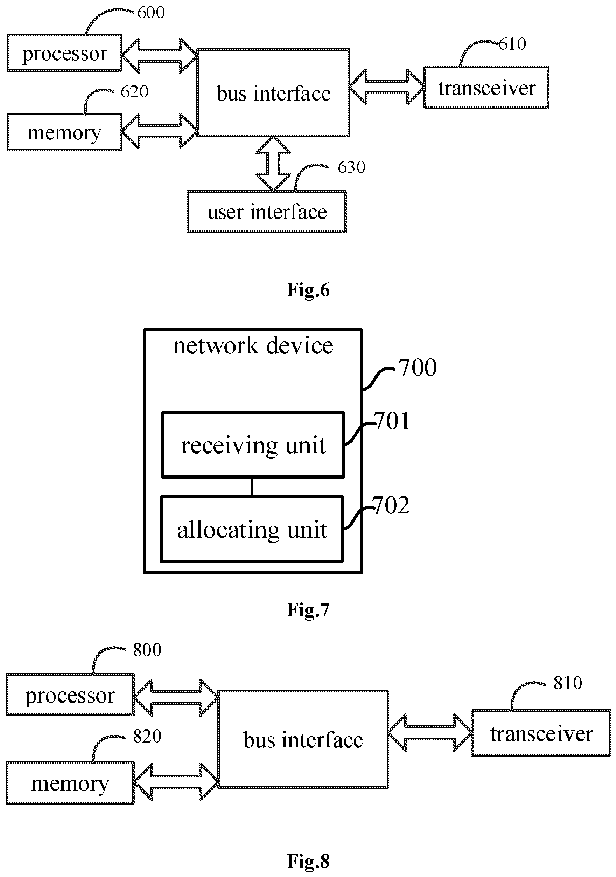

As shown in Fig.6, an embodiment of the present disclosure further provides a terminal device, including a processor 600, a transceiver 610, a memory 620, and a program stored in the memory 620 and executable on the processor 600; where the transceiver 610 is connected to the processor 600 and the memory 620 through a bus interface, where the processor 600 is used to read the program in the memory and execute the following process:
sending, through the transceiver 610, assistance information to a network device;
where the assistance information includes at least one of the following:
   a correspondence between a destination address of a sidelink interface and a message type of a sidelink interface message; or
   identification information of the terminal device.

The transceiver 610 is configured to receive and send data under the control of the processor 600.

Among them, in Figure 6, the bus architecture may include any number of interconnected buses and bridges, specifically one or more processors represented by processor 600 and various circuits of memory represented by memory 620 are linked together. The bus architecture can also link various other circuits such as peripherals, voltage regulators, and power management circuits together, which are all well known in the art, so they are not further described herein. The bus interface provides an interface. The transceiver 610 can be a plurality of components, namely, a transmitter and a receiver, providing a unit for communicating with various other devices on a transmission medium, and these transmission media include transmission media such as wireless channels, wired channels, and optical cables. For different user devices, the user interface 630 can also be an interface that can be connected to external and internal devices, and the connected devices include but are not limited to keypads, displays, speakers, microphones, joysticks, etc.

The processor 600 is responsible for managing the bus architecture and general processing, and the memory 620 can store data used by the processor 600 when performing operations.

Optionally, the processor 600 may be a CPU (central processing unit), an ASIC (Application Specific Integrated Circuit), an FPGA (Field-Programmable Gate Array) or a CPLD (Complex Programmable Logic Device), and the processor may also adopt a multi-core architecture.

The processor, by calling the computer program stored in the memory, is used to execute any of the methods provided by the embodiments of this application according to the obtained executable instructions. The processor and the memory can also be physically arranged separately.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
   a relay from terminal device to network device;
   a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

It should be noted here that the above-mentioned terminal device provided in the embodiment of the present disclosure can implement all the method steps implemented in the above-mentioned method embodiment, and can achieve the same technical effect. The parts and beneficial effects of this embodiment that are the same as the method embodiment will not be described in detail here.

The embodiment of the present disclosure also provides a computer-readable storage medium, on which a computer program is stored, where the computer program, when executed by a processor, implements the steps of the information transmission method applied to a terminal device. The processor-readable storage medium can be any available medium or data storage device that can be accessed by the processor, including but not limited to magnetic storage (such as floppy disk, hard disk, magnetic tape, magneto-optical disk (MO), etc.), optical storage (such as CD, DVD, BD, HVD, etc.), and semiconductor storage (such as ROM, EPROM, EEPROM, non-volatile memory (NAND FLASH), solid-state drive (SSD)), etc.

As shown in Fig. 7, an embodiment of the present disclosure provides a network device 700, including:
a receiving unit 701, configured to receive assistance information sent by a terminal device;
an allocating unit 702, configured to allocate resources of a sidelink interface for the terminal device according to the assistance information;
where the assistance information includes at least one of the following:
   a correspondence between a destination address of a sidelink interface and a message type of a sidelink interface message; or
   identification information of the terminal device.

Optionally, the allocating unit 701 is configured to perform:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, after the allocating unit 702 allocates resources of the sidelink interface for the terminal device according to the assistance information, the apparatus further includes:
a second sending unit, configured to send a first configuration to the terminal device;
the first configuration includes at least one of the following:
   indicating configuration information corresponding to the terminal device by the terminal device;
   indicating configuration information corresponding to the destination address of each sidelink interface of the terminal device based on the destination address of each sidelink interface of the terminal device;
   indicating, based on a first parameter of the terminal device, configuration information corresponding to the first parameter;
   indicating, based on a first parameter in each destination address of the sidelink interface of the terminal device, configuration information corresponding to the first parameter;
   where the first parameter includes: the message type and/or identification information of the sidelink interface message, and the configuration information includes at least one of the following: a resource allocation mode and a time-frequency resource configuration.

Optionally, the transmission mode of the first configuration includes one of the following:
radio resource control (RRC) reconfiguration message;
terminal-to-network interface downlink RRC message.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
   a relay from terminal device to network device;
   a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

It should be noted that the network device embodiment is a network device that corresponds one-to-one to the above method embodiment, and all implementation methods in the above method embodiment are applicable to the embodiment of the network device and can achieve the same technical effect.

It should be noted that the division of units in the embodiments of the present application is schematic and is only a logical function division. There may be other division methods in actual implementation. In addition, each functional unit in each embodiment of the present application may be integrated into a processing unit, or each unit may exist physically separately, or two or more units may be integrated into one unit. The above-mentioned integrated unit may be implemented in the form of hardware or in the form of software functional units.

If the integrated unit is implemented in the form of a software functional unit and sold or used as an independent product, it can be stored in a processor-readable storage medium. Based on this understanding, the technical solution of the present application is essentially or the part that contributes to the relevant technology or all or part of the technical solution can be embodied in the form of a software product. The computer software product is stored in a storage medium, including several instructions to enable a computer device (which can be a personal computer, server, or network device, etc.) or a processor (processor) to execute all or part of the steps of the method described in each embodiment of the present application. The aforementioned storage medium includes: U disk, mobile hard disk, read-only memory (ROM), random access memory (RAM), disk or optical disk and other media that can store program code.

As shown in Fig. 8, an embodiment of the present disclosure further provides a network device, including a processor 800, a transceiver 810, a memory 820, and a program stored in the memory 820 and executable on the processor 800; where the transceiver 810 is connected to the processor 800 and the memory 820 through a bus interface, where the processor 800 is used to read the program in the memory and execute the following process:
the memory is configured to store a computer program; a transceiver is configured to send and receive data under a control of the processor; and the processor is configured to read the computer program in the memory to perform:
receiving, through the transceiver 810, assistance information sent by a terminal device;
allocating resources of a sidelink interface for the terminal device according to the assistance information;
where the assistance information includes at least one of the following:
   a correspondence between a destination address of a sidelink interface and a message type of a sidelink interface message; or
   identification information of the terminal device.

The transceiver 810 is configured to receive and send data under the control of the processor 800.

In Fig. 8, the bus architecture can include any number of interconnected buses and bridges, specifically one or more processors represented by processor 800 and various circuits of memory represented by memory 820 are linked together. The bus architecture can also link various other circuits such as peripherals, regulators, and power management circuits together, which are all well known in the art, so they are not further described herein. The bus interface provides an interface. The transceiver 810 can be a plurality of components, that is, including a transmitter and a receiver, providing a unit for communicating with various other devices on a transmission medium, and these transmission media include transmission media such as wireless channels, wired channels, and optical cables. The processor 800 is responsible for managing the bus architecture and general processing, and the memory 800 can store data used by the processor 800 when performing operations.

The processor 800 may be a central processing unit (CPU), an application specific integrated circuit (ASIC), a field programmable gate array (FPGA) or a complex programmable logic device (CPLD). The processor may also adopt a multi-core architecture.

Furthermore, the processor is configured to read the computer program in the memory and perform at least one of the following operations:
Optionally, the processor is configured to read the computer program in the memory to perform:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

Optionally, the processor is configured to read the computer program in the memory to perform:
sending a first configuration to the terminal device;
the first configuration includes at least one of the following:
   indicating configuration information corresponding to the terminal device by the terminal device;
   indicating configuration information corresponding to the destination address of each sidelink interface of the terminal device based on the destination address of each sidelink interface of the terminal device;
   indicating, based on a first parameter of the terminal device, configuration information corresponding to the first parameter;
   indicating, based on a first parameter in each destination address of the sidelink interface of the terminal device, configuration information corresponding to the first parameter;
   where the first parameter includes: the message type and/or identification information of the sidelink interface message, and the configuration information includes at least one of the following: a resource allocation mode and a time-frequency resource configuration.

Optionally, the transmission mode of the first configuration includes one of the following:
radio resource control (RRC) reconfiguration message;
terminal-to-network interface downlink RRC message.

Optionally, the message type of the sidelink interface message includes one of the following:
sidelink discovery message;
sidelink communication message.

Optionally, the identification information of the terminal device includes one of the following:
remote terminal;
relay terminal; or
sidelink terminal.

Optionally, the message type includes first information, and/or the identification information of the terminal device includes the first information;
the first information includes at least one of the following:
a sidelink transmission;
a first relay;
where the first relay includes at least one of the following:
   a relay from terminal device to network device;
   a relay from terminal device to terminal device.

Optionally, the first relay further includes at least one of the following:
a Layer 2 first relay;
a Layer 3 first relay.

Optionally, when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

Optionally, a transmission mode of the assistance information includes any one of the following:
sidelink terminal information;
terminal sidelink interface assistance information;
sidelink interface radio resource control (RRC) signaling.

It should be noted here that the above-mentioned network device provided in the embodiment of the present disclosure can implement all the method steps implemented in the above-mentioned method embodiment, and can achieve the same technical effect. The parts and beneficial effects of this embodiment that are the same as those in the method embodiment will not be described in detail here.

The embodiment of the present disclosure also provides a computer-readable storage medium, on which a computer program is stored, where the computer program, when executed by a processor, implements the steps of a resource configuration method applied to a network device. The processor-readable storage medium can be any available medium or data storage device that the processor can access, including but not limited to magnetic storage (such as a floppy disk, a hard disk, a magnetic tape, a magneto-optical (MO), etc.), optical storage (such as a compact disk (CD), a digital versatile disc (DVD), a Blu-ray Disc (BD), a high-definition versatile disc (HVD), etc.), and semiconductor storage (such as ROM, Erasable Programmable Read-Only Memory (EPROM), Electrically Erasable Programmable read only memory (EEPROM), non-volatile memory (NAND FLASH), solid-state disk (SSD), etc.).

It should be noted that it should be understood that the division of the above modules is only a division of logical functions. In actual implementation, they can be fully or partially integrated into one physical entity, or they can be physically separated. And these modules can all be implemented in the form of software called by processing elements; they can also be all implemented in the form of hardware; some modules can also be implemented in the form of software called by processing elements, and some modules can be implemented in the form of hardware. For example, the determination module can be a separately established processing element, or it can be integrated in a chip of the above-mentioned device. In addition, it can also be stored in the memory of the above-mentioned device in the form of program code, and called and executed by a processing element of the above-mentioned device. The implementation of other modules is similar. In addition, these modules can be fully or partially integrated together, or they can be implemented independently. The processing element described here can be an integrated circuit with signal processing capabilities. In the implementation process, each step of the above method or each module above can be completed by an integrated logic circuit of hardware in the processor element or instructions in the form of software.

For example, each module, unit, sub-unit or sub-module may be one or more integrated circuits configured to implement the above method, such as one or more application specific integrated circuits (ASIC), or one or more microprocessors (digital signal processor, DSP), or one or more field programmable gate arrays (FPGA), etc. For another example, when a module above is implemented in the form of a processing element scheduling program code, the processing element may be a general-purpose processor, such as a central processing unit (CPU) or other processor that can call program code. For another example, these modules can be integrated together and implemented in the form of a system-on-a-chip (SOC).

The terms "first," "second," etc., in the specification and claims of this disclosure are used to distinguish similar objects, and do not necessarily denote a specific order or sequence. It should be understood that such terms may be used interchangeably where appropriate, so that the embodiments of the present disclosure described herein can be practiced in sequences other than those illustrated or described. Furthermore, the terms "include" and "have," as well as any variations thereof, are intended to cover non-exclusive inclusion, meaning a process, method, system, product, or device that includes a series of steps or units is not limited to only those steps or units explicitly listed but may include other steps or units not explicitly listed or inherent to such processes, methods, products, or devices. Additionally, "and/or" in the specification and claims indicates that at least one of the connected items is included. For example, "A and/or B and/or C" means that it includes any one of A alone, B alone, C alone, A and B together, B and C together, A and C together, and all three of A, B, and C. Similarly, in the specification and claims, "at least one of A and B" should be understood to mean "A alone, B alone, or both A and B together".

Those skilled in the art will appreciate that the embodiments of the present application may be provided as methods, systems, or computer program products. Therefore, the present application may take the form of a complete hardware embodiment, a complete software embodiment, or an embodiment combining software and hardware. Moreover, the present application may take the form of a computer program product implemented on one or more computer-usable storage media (including but not limited to disk storage and optical storage, etc.) containing computer-usable program codes.

The present application is described with reference to the flowcharts and/or block diagrams of the methods, devices (systems), and computer program products according to the embodiments of the present application. It should be understood that each process and/or box in the flowchart and/or block diagram, as well as the combination of the processes and/or boxes in the flowchart and/or block diagram, can be implemented by computer executable instructions. These computer executable instructions can be provided to a processor of a general-purpose computer, a special-purpose computer, an embedded processor, or other programmable data processing device to generate a machine, so that the instructions executed by the processor of the computer or other programmable data processing device generate a device for implementing the functions specified in one process or multiple processes in the flowchart and/or one box or multiple boxes in the block diagram.

These processor-executable instructions may also be stored in a processor-readable memory that can direct a computer or other programmable data processing device to operate in a specific manner, so that the instructions stored in the processor-readable memory produce a product including an instruction device that implements the functions specified in one or more processes in the flowchart and/or one or more boxes in the block diagram.

These processor-executable instructions may also be loaded onto a computer or other programmable data processing device so that a series of operational steps are executed on the computer or other programmable device to produce a computer-implemented process, whereby the instructions executed on the computer or other programmable device provide steps for implementing the functions specified in one or more flows in the flowchart and/or one or more blocks in the block diagram.

Obviously, those skilled in the art can make various changes and modifications to the present application without departing from the spirit and scope of the present application. Thus, if these modifications and variations of the present application fall within the scope of the claims of the present application and their equivalents, the present application is also intended to include these modifications and variations.

## Claims

1. An information transmission method, performed by a terminal device, comprising:
sending assistance information to a network device;
wherein the assistance information comprises at least one of the following:
a correspondence between a destination address of a sidelink interface and a message type of a sidelink interface message; or
identification information of the terminal device.

2. The method according to claim 1, wherein the message type of the sidelink interface message comprises one of the following:
sidelink discovery message;
sidelink communication message.

3. The method according to claim 1, wherein the identification information of the terminal device comprises one of the following:
remote terminal;
relay terminal; or
sidelink terminal.

4. The method according to any one of claims 1 to 3, wherein the message type comprises first information, and/or the identification information of the terminal device comprises the first information;
the first information comprises at least one of the following:
a sidelink transmission;
a first relay;
wherein the first relay comprises at least one of the following:
a relay from terminal device to network device;
a relay from terminal device to terminal device.

5. The method according to claim 4, wherein the first relay further comprises at least one of the following:
a Layer 2 first relay;
a Layer 3 first relay.

6. The method according to claim 3, wherein when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

7. The method according to claim 1, wherein a transmission mode of the assistance information comprises any one of the following:
sidelink terminal information;
terminal sidelink interface assistance information;
sidelink interface radio resource control (RRC) signaling.

8. A resource configuration method, performed by a network device, comprising:
receiving assistance information sent by a terminal device;
allocating resources of a sidelink interface for the terminal device according to the assistance information;
wherein the assistance information comprises at least one of the following:
a correspondence between a destination address of a sidelink interface and a message type of a sidelink interface message; or
identification information of the terminal device.

9. The method according to claim 8, wherein the allocating resources of the sidelink interface for the terminal device according to the assistance information comprises at least one of the following:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

10. The method according to claim 8, wherein subsequent to the allocating resources of a sidelink interface for the terminal device according to the assistance information, the method further comprises:
sending a first configuration to the terminal device;
the first configuration comprises at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
wherein the first parameter comprises: the message type and/or identification information of the sidelink interface message, and the configuration information comprises at least one of the following: a resource allocation mode and a time-frequency resource configuration.

11. The method according to claim 10, wherein the transmission mode of the first configuration comprises one of the following:
radio resource control (RRC) reconfiguration message;
terminal-to-network interface downlink RRC message.

12. The method according to claim 8, wherein the message type of the sidelink interface message comprises one of the following:
sidelink discovery message;
sidelink communication message.

13. The method according to claim 8, wherein the identification information of the terminal device comprises one of the following:
remote terminal;
relay terminal; or
sidelink terminal.

14. The method according to claim 8, 12 or 13, wherein the message type comprises first information, and/or the identification information of the terminal device comprises the first information;
the first information comprises at least one of the following:
a sidelink transmission;
a first relay;
wherein the first relay comprises at least one of the following:
a relay from terminal device to network device;
a relay from terminal device to terminal device.

15. The method according to claim 14, wherein the first relay further comprises at least one of the following:
a Layer 2 first relay;
a Layer 3 first relay.

16. The method according to claim 13, wherein when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

17. The method according to claim 8, wherein a transmission mode of the assistance information comprises any one of the following:
sidelink terminal information;
terminal sidelink interface assistance information;
sidelink interface radio resource control (RRC) signaling.

18. A terminal device, comprising a memory, a transceiver, and a processor:
the memory is configured to store a computer program; a transceiver is configured to send and receive data under a control of the processor; and the processor is configured to read the computer program in the memory to perform:
sending, through the transceiver, assistance information to a network device;
wherein the assistance information comprises at least one of the following:
a correspondence between a destination address of a sidelink interface and a message type of a sidelink interface message; or
identification information of the terminal device.

19. The terminal device according to claim 18, wherein the message type of the sidelink interface message comprises one of the following:
sidelink discovery message;
sidelink communication message.

20. The terminal device according to claim 18, wherein the identification information of the terminal device comprises one of the following:
remote terminal;
relay terminal; or
sidelink terminal.

21. The terminal device according to any one of claims 18 to 20, wherein the message type comprises first information, and/or the identification information of the terminal device comprises the first information;
the first information comprises at least one of the following:
a sidelink transmission;
a first relay;
wherein the first relay comprises at least one of the following:
a relay from terminal device to network device;
a relay from terminal device to terminal device.

22. The terminal device according to claim 21, wherein the first relay further comprises at least one of the following:
a Layer 2 first relay;
a Layer 3 first relay.

23. The terminal device according to claim 20, wherein when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

24. The terminal device according to claim 18, wherein a transmission mode of the assistance information comprises any one of the following:
sidelink terminal information;
terminal sidelink interface assistance information;
sidelink interface radio resource control (RRC) signaling.

25. A network device, comprising a memory, a transceiver, and a processor:
the memory is configured to store a computer program; a transceiver is configured to send and receive data under a control of the processor; and the processor is configured to read the computer program in the memory to perform:
receiving, through the transceiver, assistance information sent by a terminal device;
allocating resources of a sidelink interface for the terminal device according to the assistance information;
wherein the assistance information comprises at least one of the following:
a correspondence between a destination address of a sidelink interface and a message type of a sidelink interface message; or
identification information of the terminal device.

26. The network device according to claim 25, wherein the processor is configured to read the computer program in the memory to perform at least one of the following:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

27. The network device according to claim 25, wherein the processor is configured to read the computer program in the memory to perform:
sending, through the transceiver, a first configuration to the terminal device;
the first configuration comprises at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
wherein the first parameter comprises: the message type and/or identification information of the sidelink interface message, and the configuration information comprises at least one of the following: a resource allocation mode and a time-frequency resource configuration.

28. An information transmission apparatus, applied to a terminal device, comprising:
a first sending unit, configured to send assistance information to a network device;
wherein the assistance information comprises at least one of the following:
a correspondence between a destination address of a sidelink interface and a message type of a sidelink interface message; or
identification information of the terminal device.

29. The apparatus according to claim 28, wherein the message type of the sidelink interface message comprises one of the following:
sidelink discovery message;
sidelink communication message.

30. The apparatus according to claim 28, wherein the identification information of the terminal device comprises one of the following:
remote terminal;
relay terminal; or
sidelink terminal.

31. The apparatus according to any one of claims 28 to 30, wherein the message type comprises first information, and/or the identification information of the terminal device comprises the first information;
the first information comprises at least one of the following:
a sidelink transmission;
a first relay;
wherein the first relay comprises at least one of the following:
a relay from terminal device to network device;
a relay from terminal device to terminal device.

32. The apparatus according to claim 31, wherein the first relay further comprises at least one of the following:
a Layer 2 first relay;
a Layer 3 first relay.

33. The apparatus according to claim 30, wherein when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

34. The apparatus according to claim 28, wherein a transmission mode of the assistance information comprises any one of the following:
sidelink terminal information;
terminal sidelink interface assistance information;
sidelink interface radio resource control (RRC) signaling.

35. A resource configuration apparatus, applied to a network device, comprising:
a receiving unit, configured to receive assistance information sent by a terminal device;
an allocating unit, configured to allocate resources of a sidelink interface for the terminal device according to the assistance information;
wherein the assistance information comprises at least one of the following:
a correspondence between a destination address of a sidelink interface and a message type of a sidelink interface message; or
identification information of the terminal device.

36. The apparatus according to claim 35, wherein the allocating unit is configured to perform:
in a case that the sidelink interface messages corresponding to different destination addresses of the sidelink interface of the terminal device have different message types, and different message types correspond to different resource pools, allocating resources in different resource pools to different destination addresses;
configuring different resource allocation modes for the terminal devices having different identification information;
using different resource allocation strategies for terminals having different identification information.

37. The apparatus according to claim 35, wherein after the allocating unit allocates resources of the sidelink interface for the terminal device according to the assistance information, the apparatus further comprises:
a second sending unit, configured to send a first configuration to the terminal device;
the first configuration comprises at least one of the following:
indicating configuration information corresponding to the terminal device by the terminal device;
indicating configuration information corresponding to the destination address of each sidelink interface of the terminal device based on the destination address of each sidelink interface of the terminal device;
indicating, based on a first parameter of the terminal device, configuration information corresponding to the first parameter;
indicating, based on a first parameter in each destination address of the sidelink interface of the terminal device, configuration information corresponding to the first parameter;
wherein the first parameter comprises: the message type and/or identification information of the sidelink interface message, and the configuration information comprises at least one of the following: a resource allocation mode and a time-frequency resource configuration.

38. The apparatus according to claim 37, wherein the transmission mode of the first configuration comprises one of the following:
radio resource control (RRC) reconfiguration message;
terminal-to-network interface downlink RRC message.

39. The apparatus according to claim 35, wherein the message type of the sidelink interface message comprises one of the following:
sidelink discovery message;
sidelink communication message.

40. The apparatus according to claim 35, wherein the identification information of the terminal device comprises one of the following:
remote terminal;
relay terminal; or
sidelink terminal.

41. The apparatus according to claim 35, 39 or 40, wherein the message type comprises first information, and/or the identification information of the terminal device comprises the first information;
the first information comprises at least one of the following:
a sidelink transmission;
a first relay;
wherein the first relay comprises at least one of the following:
a relay from terminal device to network device;
a relay from terminal device to terminal device.

42. The apparatus according to claim 41, wherein the first relay further comprises at least one of the following:
a Layer 2 first relay;
a Layer 3 first relay.

43. The apparatus according to claim 40, wherein when the assistance information carries the identification information of the terminal device and the identification information of the terminal device indicates that the terminal is a relay terminal, the assistance information further carries duplex capability indication information supported by the relay terminal at the sidelink interface;
the duplex capability indication information is configured to indicate that the relay terminal supports full-duplex or half-duplex at the sidelink interface.

44. The apparatus according to claim 35, wherein a transmission mode of the assistance information comprises any one of the following:
sidelink terminal information;
terminal sidelink interface assistance information;
sidelink interface radio resource control (RRC) signaling.

45. A processor-readable storage medium, storing a computer program, wherein the computer program is configured to cause the processor to perform the method according to any one of claims 1 to 7 or any one of claims 8 to 17.
